# EUROPÄISCHE PATENTANMELDUNG

(11) **EP 0 832 853 A2**
(43) Veröffentlichungstag der Anmeldung: **01.04.1998**
(21) Anmeldenummer: 97810674.8
(22) Anmeldetag: 17.09.1997
(51) Int. Cl.: C02F 1/72, C02F 11/14

(54) **Verfahren zur Behandlung von Schlämmen bei der biologischen Abwasserreinigung**

(30) Priorität: 26.09.1996 DE 19639716
(71) Anmelder: Ciba Specialty Chemicals Holding Inc., 4057 Basel (CH)
(72) Erfinder: Malisz, Jacek, 79639 Grenzach-Wyhlen (DE)

(57) **Zusammenfassung**

Beschrieben wird ein Verfahren zur Beseitigung unerwünschter Gerüche und/oder zur Verbesserung der Filtrierbarkeit von Schlämmen, die bei der biologischen Abwasserreinigung anfallen. Die Schlämme werden in wässriger Dispersion mit H₂O₂ und einem Eisen(II)-salz vermischt.

## Beschreibung

Gegenstand der vorliegenden Erfindung ist ein Verfahren zur Beseitigung unerwünschter Gerüche und/oder zur Verbesserung der Filtrierbarkeit von Schlämmen, die bei der biologischen Abwasserreinigung anfallen.

Bei der üblichen biologischen Abwasserreinigung in Belebungsbecken gelangt das Wasser-Schlamm-Gemisch im Anschluss an die Belebungsstufe in ein Nachklärbecken, an dessen Boden sich der Schlamm absetzt, der zum grössten Teil aus Mikroorganismen besteht. Dieser Schlamm wird dann abgetrennt und in geeigneter Weise weiterbehandelt. Aus technischen oder ökonomischen Gründen ist oft eine sofortige Entsorgung des Schlammes, z.B. durch Verbrennung, nicht möglich, so dass dieser über einige Tage oder Wochen gelagert werden muss. Dabei ergeben sich zuweilen grosse Probleme wegen des Auftretens unerwünschter und/oder giftiger Gerüche, die u.a. von der Bildung von Schwefelwasserstoff und Merkaptanen aus Schwefelverbindungen herrühren. Zudem kann der Schlamm nach längerem Stehen häufig nicht durch Filtrieren oder Zentrifugieren weiter entwässert werden, so dass die Kosten für die Verbrennung beträchtlich ansteigen.

Der vorliegenden Erfindung lag die Aufgabe zugrunde, diese Probleme durch geeignete Massnahmen zu vermindern oder ganz zu beseitigen.

Es wurde nun gefunden, dass durch eine Behandlung des Schlammes mit einer wässrigen Lösung, enthaltend eine Sauerstoff abspaltende Verbindung, insbesondere H₂O₂, und ein Metallsalz, insbesondere ein Eisen(ll)-salz, die genannten Probleme gelöst werden können. Die Gerüche, insbesondere nach Schwefelwasserstoff oder Merkaptanen, werden durch diese Behandlung beseitigt und treten überraschenderweise auch bei weiterem Stehen des Schlamms während mehrerer Tage nicht wieder auf. Ausserdem ist der Schlamm nun gut filtrierbar und kann durch Sedimentieren, Zentrifugieren oder Filtrieren leicht auf einen Feststoffgehalt von ca. 20 - 40 % aufkonzentriert werden.

Gegenstand der vorliegenden Erfindung ist somit ein Verfahren zur Behandlung von Schlämmen, die bei der biologischen Abwasserreinigung anfallen, das dadurch gekennzeichnet ist, dass man die Schlämme ohne zu heizen in wässriger Dispersion mit H₂O₂ und einem Eisen(ll)-salz vermischt.

Das Verfahren eignet sich für Schlämme aus der biologischen Abwasserreinigung sowohl von Industrieabwässern als auch von Abwässern aus Haushalten. Insbesondere eignet es sich für die Behandlung von Abwässern, die Schwefelverbindungen, beispielsweise aromatische Sulfonsäuren, oder Fäkalien enthalten.

H₂O₂ wird im erfindungsgemässen Verfahren zweckmässigerweise als wässrige Lösung eingesetzt, vor allem als Lösung, enthaltend 30 bis 50 Gew.-% H₂O₂. Die benötigte Menge lässt sich leicht anhand von relativ einfachen Versuchen ermitteln. Im allgemeinen verwendet man zwischen 5 und 100 Liter einer 30 bis 50 % igen wässrigen H₂O₂-Lösung pro m³ Schlamm. Vorzugsweise verwendet man zwischen 10 und 70 Liter einer 30 bis 40 % igen wässrigen H₂O₂-Lösung pro m³ Schlamm.

Als Eisen(ll)-salze kommen anorganische oder organische Salze in Frage, beispielsweise Eisen(ll)-chlorid, -nitrat, -sulfat, -acetat oder -formiat, wobei Eisen(ll)-sulfat besonders bevorzugt ist. Die Eisensalze werden bevorzugt als wässrige Lösung dem Schlamm zugesetzt. Die Menge an Eisensalz richtet sich nach der erforderlichen Menge an H₂O₂. Normalerweise setzt man zwischen 0,01 und 1 Mol, vorzugsweise zwischen 0,05 und 0,2 Mol Eisensalz pro Mol H₂O₂ ein.

Die Lösung des Eisensalzes und die H₂O₂-Lösung werden vorzugsweise unmittelbar nacheinander zu dem Schlamm zudosiert, wobei kontinuierliche oder diskontinuierliche Reaktionsführung möglich ist. Der Schlamm wird während der Zugabe durch geeignete Vorrichtungen verrührt oder vermischt. Vorzugsweise verwendet man dazu einen statischen Mischer.

Während der Behandlung sollte der pH-Wert der Reaktionsmischung zwischen 2 und 6 liegen. Erforderlichenfalls wird dieser pH-Wert durch Zugabe einer geeigneten anorganischen oder organischen Säure, insbesondere von Schwefelsäure eingestellt. Selbstverständlich kann die pH-Einstellung mit verunreinigter Säure, die sowieso entsorgt werden muss, erfolgen. Es hat sich als günstig erwiesen, wenn die ggf. erforderliche Säure gleichzeitig zusammen mit der Lösung des Eisensalzes zugegeben wird.

Die Temperatur sollte zwischen etwa 10 und 38 °C, vorzugsweise zwischen 15 und 30 °C liegen. Dazu ist kein Aufheizen erforderlich, da während der Reakton Wärme entsteht.

Die Dauer der Behandlung hängt u.a. von der Zusammensetzung und Beschaffenheit des Schlammes, der Temperatur und der Konzentration an H₂O₂ und Eisensalz ab. Eine Reaktionszeit zwischen 5 und 60 Minuten ist normalerweise ausreichend.

Die Reaktion kann in offenen Gefässen stattfinden, wird wegen der unerwünschten Gerüche der Schlämme jedoch vorzugsweise in geschlossenen Reaktoren durchgeführt. Da die Reaktion exotherm verläuft, ist keine Heizung erforderlich.

Vorzugsweise arbeitet mabn in einem adiabatischen Rohrreaktor, der mit einer Pumpe zur Förderung des Schlamms, Vorrichtungen zur Zugabe von H₂O₂ und Eisen(ll)-Salz sowie einer Vorrichtung zum Vermischen des Schlamms mit den Chemikalien ausgestattet ist, beispielsweise einem Rührer oder Mischer.

Nach der Reaktion sind die Gerüche verschwunden und treten auch nach mehrtägigem Stehen nicht wieder auf. Die Zellmembranen der Mikroorganismen werden durch die Behandlung weitgehend zerstört und der Schlamm kann weiter entwässert werden. Bei Verwendung einer Zentrifuge erreicht man einen Feststoffgehalt von etwa 28 bis 36 %, bei Verwendung einer Kammerfilterpresse von etwa 28 bis 40 %. Anschliessend kann der Schlamm auf übliche Weise entsorgt werden, z.B. durch Verbrennung.

Die folgenden Beispiele erläutern die Erfindung, ohne sie darauf zu beschränken.

### Beispiel 1:

200 ml biologisch aktiver Schlamm aus der Vorklärung, der einen intensiven Geruch nach H₂S und anderen nicht näher identifizierten Substanzen besitzt, werden in einem Glasbecher vorgelegt und mit einem Magnetrührer gerührt. Dann setzt man eine Lösung von 1,1 g FeSO₄ x 7 H₂O in 10 ml 10 %iger Schwefelsäure und anschliessend 4 ml 35 %ige wässrige H₂O₂-Lösung zu und rührt noch eine Stunde bei Raumtemperatur.

Der Geruch des Schlamms ist völlig verschwunden und tritt auch nach 5-tägigem Stehen bei Raumtemperatur nicht wieder auf. Der Schlamm kann mit einer Zentrifuge auf einen Trockengehalt von 40 % entwässert werden.

Vor der Behandlung mit Eisensalz und H₂O₂ war eine Aufkonzentrierung des Schlammes mit der gleichen Zentrifuge nicht möglich.

### Beispiel 2:

200 ml Schlamm aus der chemischen Ausfällung einer Mischung aus kommunalen Abwässern und Industrieabwässern, enthaltend u.a. aromatische Sulfonsäuren, der einen intensiven Geruch nach H₂S und anderen nicht näher identifizierten Substanzen besitzt, werden in einem Glasbecher vorgelegt und mit einem Magnetrührer gerührt. Dann setzt man eine Lösung von 1,1 g FeSO₄ x 7 H₂O in 10 ml 10 %iger Schwefelsäure und anschliessend 4 ml 35 %ige wässrige H₂O₂-Lösung zu und rührt noch eine Stunde bei Raumtemperatur.

Der Geruch des Schlamms ist völlig verschwunden und tritt auch nach 5-tägigem Stehen bei Raumtemperatur nicht wieder auf. Der Schlamm kann nun mit einer Zentrifuge oder durch Filtrieren auf einen Trockengehalt von 40 % entwässert werden.

Vor der Behandlung mit Eisensalz und H₂O₂ war eine Aufkonzentrierung des Schlammes mit der gleichen Zentrifuge nicht möglich.

### Beispiel 3: (Vergleichsbeispiel)

Bei der analogen Behandlung des gleichen Schlammes wie im Beispiel 2 nur mit der Eisensulfatlösung oder nur mit der H₂O₂-Lösung wird zwar der Geruch nach H₂S zunächst beseitigt; er tritt aber nach 5-tägigem Stehen bei Raumtemperatur wieder auf. Der Schlamm kann durch Filtrieren oder Zentrifugieren nicht weiter aufkonzentriert werden.

### Beispiel 4:

Behandlung von angefaultem Schlamm, folgender Zusammensetzung:
- biologischer Schlamm (ca. 80%)
- aus der Vorklärung der chemischen Abwässer (ca. 20%).
TS-Gehalt 8 bis 10 g/L.

Dieser Schlamm läßt sich nicht durch Zentrifuge/Klärfilterpresse entwässern und entwickelt intensiven, für die Faulprozesse typischen Geruch.

### Bedarf an Chemikalien:

| Chemikalie | Menge [m³] Schlamm |
|---|---|
| H₂O₂ 35% | 20 L |
| H₂SO₄ 10% | 50 L |
| FeSO₄ x 7 H2O | 5,6 kg |

Es wird Abfallschwefelsäure, d. h. verunreinigte, bereits verwendete Schwefelsäure eingesetzt.
FeSO₄ x 7 H2O und H₂SO₄: Einsatz als 14%-ige Lösung in 10%-iger H₂SO_{4.}

### Durchführung:

In die Saugleitung einer Schlauchquetchpumpe, die aus einem Becken den Schlamm in den Rohrreaktor ansaugt, werden proportional dem Schlammdurchsatz die Chemikalien zudosiert, und zwar zunächst Eisen(ll)-Lösung in 10%-iger Schwefelsäure und dann Wasserstoffperoxid.

Der Pumpe sind ein statischer Mischer und ein Rohrreaktor mit einem drucklosen Ausgang in ein Pufferbecken nachgeschaltet.

| | | |
|---|---|---|
| Reaktordaten | Länge | 120 m |
| | Durchmesser | 0,10 m |

| | | |
|---|---|---|
| Reaktionsführung | Durchsatz | 6 m³/h (Schlamm) |
| | Verweilzeit ca. | 9,5 min |
| | pH | 2 - 3 |
| | Anfangstemp. | 5 - 15 °C |

Nach der Reaktion wird der behandelte Schlamm auf einem konventionellen Wege mit einer Zentrifuge entwässert. Auf dieser Art werden folgenden Daten erreicht:

| | |
|---|---|
| TS-Gehalt im Schlamm | 28 - 34 % |
| TS-Gehalt im Zentrat | 0,2 - 0,8 g/L |

Mit der Methode wurden erfolgreich etwa 6.000 m³ Schlamm behandelt.

### Beispiel 5:

Behandlung von angefaultem Schlamm folgender Zusammensetzung:
- biologischer Schlamm (ca. 20%)
- aus der Feststoffabtrennung von den Waschwässern und Mutterlaugen (ca. 80%)
TS-Gehalt < 100 g/L

Dieser Schlamm läßt sich nicht durch Zentrifuge/Klärfilterpresse entwässern und entwickelt einen intensiven Geruch, vorwiegend chemischer Art (Merkaptane, CS₂, H₂S, etc.)

### Bedarf an Chemikalien

| Chemikalie | Menge [m3] Schlamm |
|---|---|
| H₂O₂ 35% | 50 L |
| H₂SO₄ 10% | 100 L |
| FeSO₄ x 7 H2O | 13,6 kg |

FeSO₄ x 7 H2O und H₂SO₄; Einsatz als 14%-ige Lösung in 10%-iger H₂SO₄ (gebrauchte)

Durchführung: In die Saugleitung einer Schlauchquetchpumpe, die aus einem Becken den Schlamm in den Rohrreaktor ansaugt, werden proportional dem Schlammdurchsatz Chemikalien zudosiert, und zwar zunächst Eisen(ll)-Lösung in 10%-iger Schwefelsäure und dann Wasserstoffperoxid.

Der Pumpe sind ein statischer Mischer und ein Rohrreaktor mit einem drucklosen Ausgang in ein Pufferbecken nachgeschaltet.

| | | |
|---|---|---|
| Reaktordaten | Länge | 50 m |
| | Durchmesser | 0,10 m |

| | | |
|---|---|---|
| Reaktionsführung | Durchsatz | 5 m³/h (Schlamm) |
| | Verweilzeit ca. | 5 min |
| | pH | 2 - 3 |
| | Anfangstemp. | 15°C |

Nach der Reaktion wird der behandelte Schlamm auf einem konventionellen Wege mit einer Zentrifuge entwässert. Auf dieser Art werden folgenden Daten erreicht:

| | |
|---|---|
| TS-Gehalt im Schlamm | 28 - 36 % |
| TS-Gehalt im Zentrat | 0,2 - 1,2 g/L |

Mit der Methode wurden erfolgreich etwa 1.000 m³ Schlamm behandelt.

## Patentansprüche

1. Verfahren zur Behandlung von Schlämmen bei der biologischen Abwasserreinigung, dadurch gekennzeichnet, dass man die Schlämme in wässriger Dispersion mit H₂O₂ und einem Eisen(II)-salz ohne zu heizen vermischt.

2. Verfahren gemäss Anspruch 1, dadurch gekennzeichnet, dass man bei einer Temperatur zwischen 10 und 38 °C, vorzugsweise zwischen 15 und 30 °C arbeitet.

3. Verfahren gemäss einem der Ansprüche 1 bis 2, dadurch gekennzeichnet, dass man in einem adiabatischen Rohrreaktor arbeitet.

4. Verfahren gemäss einem der Ansprüche 1 bis 3, dadurch gekennzeichnet, dass man die Schlämme mit 5 bis 100 Liter einer 30 bis 50 % igen wässrigen H₂O₂-Lösung pro m³ Schlamm behandelt.

5. Verfahren gemäss Anspruch 4, dadurch gekennzeichnet, dass man die Schlämme mit 10 bis 70 Liter einer 30 bis 40 % igen wässrigen H₂O₂-Lösung pro m³ Schlamm behandelt.

6. Verfahren gemäss einem der Ansprüche 1 bis 5, dadurch gekennzeichnet, dass man die Schlämme mit 0,01 bis 1 Mol Eisensalz pro Mol H₂O₂ behandelt.

7. Verfahren gemäss einem der Ansprüche 1 bis 6, dadurch gekennzeichnet, dass man die Schlämme mit 0,05 bis 0,2 Mol Eisensalz pro Mol H₂O₂ behandelt.

8. Verfahren gemäss einem der Ansprüche 1 bis 7, dadurch gekennzeichnet, dass man als Eisen(II)-salz Eisen(II)-chlorid, -nitrat, -sulfat, -acetat oder -formiat verwendet.

9. Verfahren gemäss Anspruch 8, dadurch gekennzeichnet, dass man Eisen(ll)-sulfat verwendet.

10. Verfahren gemäss einem der Ansprüche 1 bis 9, dadurch gekennzeichnet, dass man das Eisen(ll)-salz zusammen mit einer Säure zusetzt.

11. Verfahren gemäss einem der Ansprüche 1 bis 10, dadurch gekennzeichnet, dass man bei einem pH-Wert zwischen 2 und 6 arbeitet.

12. Verfahren gemäss einem der Ansprüche 1 bis 10, dadurch gekennzeichnet, dass man unerwünschte Gerüche beseitigt und die Filtrierbarkeit der Schlämme verbessert.
